# EUROPÄISCHE PATENTSCHRIFT

(11) **EP 3 306 424 B1**
(45) Veröffentlichungstag und Bekanntmachung des Hinweises auf die Patenterteilung: **14.08.2019**
(21) Anmeldenummer: 16193051.6
(22) Anmeldetag: 10.10.2016
(51) Int. Cl.: G05B 19/418, G05B 23/02

(54) **VERFAHREN ZUR MASCHINENÜBERGREIFENDEN NUTZUNG VON DATEN ZUR BESTIMMUNG DES BETRIEBSZUSTANDS EINER WEITEREN MASCHINE**
METHOD FOR USE OF DATA ACROSS MACHINES TO DETERMINE THE OPERATING STATE OF ANOTHER MACHINE
PROCÉDÉ D'UTILISATION DE DONNÉES APPARTENANT À PLUSIEURS MACHINES POUR DÉTERMINER UN ÉTAT DE FONCTIONNEMENT D'UNE AUTRE MACHINE

(43) Veröffentlichungstag der Anmeldung: 11.04.2018
(73) Patentinhaber: SICK AG, 79183 Waldkirch/Breisgau (DE)
(72) Erfinder: Füger, Bernhard, 77654 Offenburg (DE); Schmidt, Fabian, 79331 Teningen (DE); Rapp, Christian, 22359 Hamburg (DE)
(74) Vertreter: Manitz Finsterwald Patent- und Rechtsanwaltspartnerschaft mbB

(56) Entgegenhaltungen:
- EP-A1- 1 903 411
- DE-A1-102010 031 344
- US-A1- 2012 165 988
- US-A1- 2012 210 158

## Beschreibung

Die vorliegende Erfindung betrifft ein Verfahren zur maschinenübergreifenden Nutzung von Daten, bei welchem Betriebsdaten von mehreren Maschinen von mehreren Sensoren erfasst werden, wobei die Betriebsdaten unterschiedliche erste Datenformate aufweisen, wobei das erste Datenformat jeweils von dem jeweiligen Sensor abhängt.

In heutigen Produktionsprozessen werden automatisiert umfangreiche Daten erfasst, die beispielsweise Parameter verschiedener Maschinen betreffen. Diese Daten werden z.B. zur Steuerung der jeweiligen Maschine herangezogen.

Eine weitergehende Nutzung der erfassten Daten wird hingegen nicht vorgenommen. Eine Vielzahl von erfassten Daten wird bei herkömmlichen Produktionsprozessen also nur zum Teil oder gar nicht ausgenutzt, obwohl diese Daten vorhanden sind und Informationen bzw. Wissen über die Produktionsprozesse beinhalten.

Aus der EP 1 903 411 A1 ist ein Verfahren gemäß dem Oberbegriff des Anspruchs 1 bekannt.

Es ist die der Erfindung zugrundeliegende Aufgabe, ein Verfahren anzugeben, welches eine verbesserte Ausnutzung von in Prozessen, wie z.B. Produktionsprozessen aufgezeichneten Daten ermöglicht.

Diese Aufgabe wird erfindungsgemäß durch ein Verfahren gemäß Anspruch 1 gelöst.

Das erfindungsgemäße Verfahren dient zur maschinenübergreifenden Nutzung von Daten, bei welchem
- Betriebsdaten von mehreren Maschinen von mehreren Sensoren erfasst werden, wobei die Betriebsdaten unterschiedliche erste Datenformate aufweisen, wobei das erste Datenformat jeweils von dem jeweiligen Sensor abhängt,
- die Betriebsdaten von zumindest einem Abstraktionsmodul in Abstraktionsdaten umgewandelt werden, wobei die Abstraktionsdaten ein einheitliches zweites Datenformat aufweisen und in einer zentralen oder dezentralen Speichereinrichtung gespeichert werden,
- eine Analyse der Abstraktionsdaten vorgenommen wird, wobei die Analyse auf Betriebsdaten zumindest zweier Maschinen beruht,
- anhand der Analyse ein Betriebszustand einer weiteren Maschine, die mit den zumindest zwei Maschinen in einer Produktionsstraße aufeinanderfolgende Fertigungsprozesse durchführt, beurteilt wird, und
- die Analyse der Abstraktionsdaten ausgegeben wird.

Das Verfahren schafft die Möglichkeit, zusätzliche synergistische Effekte zu schaffen, die eine Verbesserung von Produktionsprozessen ermöglichen. Durch das "Kennzeichnen der Daten" in dem zweiten Datenformat können diese maschinell wesentlich flexibler gehandhabt werden. Dadurch kann der Automatisierungsgrad, mit vergleichsweise niedrigem Aufwand, stark erhöht werden.

Das erfindungsgemäße Verfahren setzt auf dem Kerngedanken auf, dass durch eine Auswertung mehrerer Maschinen Rückschlüsse auf eine der ausgewerteten Maschinen und/oder eine andere, d.h. weitere, Maschine gezogen werden können. Durch eine solche Analyse kann beispielsweise erkannt werden, dass ein bestimmter Fehler bei einem bestimmten Typ von Maschine regelmäßig unter bestimmten äußeren Bedingungen auftritt. Für eine weitere solche Maschine kann dann der Fehler vermieden werden.

Ein weiterer Kerngedanke der Erfindung ist es, dass durch das Abstraktionsmodul ein einheitliches, beispielsweise - wie später ausgeführt - um Semantik angereichertes zweites Datenformat geschaffen wird, welches eine zentrale oder dezentrale Auswertung der Abstraktionsdaten ermöglicht. Anders ausgedrückt sind die Abstraktionsdaten derart in dem zweiten Datenformat gespeichert, dass die Abstraktionsdaten unabhängig von dem Format der Betriebsdaten sind. Dies bedeutet, dass verschiedene Betriebsdaten, d.h. Betriebsdaten in verschiedenen ersten Datenformaten, in dieselben Abstraktionsdaten umgewandelt oder angereichert werden, sofern die Betriebsdaten denselben Inhalt besitzen. Der Analyse werden also indirekt Messdaten zugrunde gelegt, d.h. die Betriebsdaten, die durch das Abstraktionsmodul in Abstraktionsdaten umgewandelt wurden.

Das zweite Datenformat schafft somit die Möglichkeit, eine Vielzahl von Sensoren, Maschinen und Prozessen zu überwachen, auszuwerten, zu analysieren, zu integrieren und die hierdurch entstandenen Abstraktionsdaten zentral oder dezentral und in einem einheitlichen Datenformat zu speichern, sodass zentrale oder dezentrale Services, wie z.B. eine zentrale oder dezentrale Auswertung, möglich werden. Zudem wird mit der Zeit eine immer umfangreiche Datenbasis aufgehäuft, die immer bessere Analysen ermöglicht.

Der Erfindung liegt also die Erkenntnis zugrunde, dass durch das zweite Datenformat für die Abstraktionsdaten ein technischer Mehrwert geschaffen werden kann, da das zweite Datenformat zur maschinenübergreifenden Auswertung und Analyse geeignet ist. Eine solche Analyse wäre allein auf verschiedenen ersten Datenformaten nahezu unmöglich oder nur mit einem sehr großen Aufwand zu bewerkstelligen.

Die Verwendung der Abstraktionsdaten mit dem einheitlichen zweiten Datenformat besitzt zudem den Vorteil, dass von beliebigen Prozessen, Maschinen oder Services auf einfache Art und Weise auf die Abstraktionsdaten zugegriffen werden kann.

Bei der Analyse werden Abstraktionsdaten von zumindest zwei Maschinen, Produkten, Prozessen und/oder Sensoren verwendet. Aufgrund der Analyse wird ein Betriebszustand einer Maschine beurteilt, wobei diese eine Maschine eine der zumindest zwei Maschinen sein kann, die der Analyse zugrunde gelegt werden. Erfindungsgemäß ist die Maschine, deren Betriebszustand beurteilt wird, eine weitere (dritte) Maschine.

Bei der Ausgabe der Analyse kann die Analyse beispielsweise graphisch mit Hilfe von Graphen, Diagrammen und dergleichen dargestellt werden. Bei der Analyse kann es sich beispielsweise um eine Live-Analyse oder eine Long-Term-Analyse handeln. Bei der Live-Analyse werden die momentan erzeugten Abstraktionsdaten analysiert und eine hierauf beruhende Analyse ausgegeben. Bei einer Long-Term-Analyse werden auch länger zurückliegende Daten, beispielsweise sämtliche in der zentralen Speichereinrichtung gespeicherten Daten, der Analyse zugeführt.

Unter einer Maschine ist bevorzugt eine einzeln ansteuerbare Einheit in einem Produktionsprozess zu verstehen, beispielsweise ein Bohrer, ein Fräser, eine Säge, ein Förderband, ein Drucker, eine Lötanlage, ein Laserbeschriftungsgerät und dergleichen. Der Sensor der die jeweilige Maschine beobachtet, kann auch in die jeweilige Maschine integriert sein und beispielsweise eine Innentemperatur oder eine Motordrehzahl angeben.

Beispielsweise kann die Erfindung in einem Produktionsprozess mit mehreren aufeinanderfolgenden Maschinen eingesetzt werden. Die Maschinen führen erfindungsgemäß in einer Produktionsstraße aufeinanderfolgende Fertigungsprozesse durch. Beispielsweise kann eine erste Maschine Bohrungen in ein Bauteil bzw. Werkstück einbringen, woraufhin eine zweite Maschine Gewinde in die Bohrungen des Bauteils schneidet und eine dritte Maschine jeweils Schrauben in das gefertigte Gewinde eindreht. Entstehen nun Fehler beim Bohren oder beim Schneiden der Gewinde, kann es damit auch zu Fehlern beim Eindrehen der Schrauben kommen. Im Umkehrschluss können auch häufig auftretende Fehler beim Eindrehen der Schrauben oder beim Einbringen der Gewinde auf Ungenauigkeiten oder Fehler beim Bohren hindeuten. Solche Fehler können durch die erfindungsgemäße Analyse von zumindest zwei Maschinen deutlich besser erkannt und beurteilt werden, als wenn jeweils eine Maschine separat betrachtet wird. Insbesondere kann auch eine Früherkennung von (später) auftretenden Fehlern vorgenommen werden, wie später noch ausgeführt wird.

In dem vorgenannten Beispiel könnten z.B. die Ergebnisse des Gewindeschneidens und des Eindrehens der Schrauben analysiert werden. Falls erkannt wird, dass sowohl der Prozess des Gewindeschneidens als auch des Eindrehens der Schraubens fehlerfrei abläuft, aber trotzdem ein hoher Anteil an fehlerhaften Bauteilen nach dem Eindrehen der Schrauben vorliegt, so kann rückgeschlossen werden, dass das Bohren z.B. zu ungenau von statten geht. In diesem Fall wird also der Betriebszustand der ersten Maschine (Bohrmaschine) anhand der Analyse der Abstraktionsdaten der zweiten und dritten Maschine beurteilt und erkannt, dass das Bohren verbesserungswürdig ist.

Weiterhin beispielhaft könnte erkannt werden, dass das Bohren und Gewindeschneiden problemlos abläuft, aber trotzdem ein gewisser Anteil an Ausschuss produziert wird. Hierdurch kann aufgrund der Auswertung mehrerer Maschinen rückgeschlossen werden, dass beim Eindrehen der Schrauben Fehler passieren. Die dritte Maschine kann dann auf ihre Funktionsfähigkeit überprüft werden.

Bei den erfassten Betriebsdaten der jeweiligen Maschine kann es sich z.B. um Daten von der Maschine selbst, um Daten des von der Maschine durchgeführten Prozesses und/oder um Daten handeln, die das von der Maschine bearbeitete Werkstück betreffen. Beispielsweise können die Daten der Maschine selbst einen Standort oder eine Identifikationsnummer der Maschine angeben. Die Daten des von der Maschine durchgeführten Prozesses können z.B. eine Drehzahl, eine Temperatur oder einen Druck angeben, der von der Maschine erzeugt wird. Die Daten, die das Werkstück betreffen, können z.B. die Position und/oder den Versatz eines Bohrlochs umfassen.

Die Betriebsdaten können von einem zentralen Server gesammelt und gespeichert werden. Die Betriebsdaten können z.B. über die Protokolle TCP (Transmission Control Protocol), UDP (User Datagram Protocol), HTTP (Hypertext Transfer Protocol) und/oder MQTT (Message Queue Telemetry Transport) oder mittels des Websocket-Protokolls übertragen werden. Alternativ oder zusätzlich können die Betriebsdaten auch über eine serielle Schnittstelle (z.B. EIA-232 oder EI-A485) übermittelt werden.

Vorteilhafte Weiterbildungen der Erfindung sind der Beschreibung, der Zeichnung sowie den Unteransprüchen zu entnehmen.

Gemäß einer ersten vorteilhaften Ausführungsform der Erfindung wird die Analyse verwendet, um zumindest eine der Maschinen, insbesondere automatisch, zu steuern. Dies bedeutet, dass eine Rückkopplung zu der Maschine stattfindet, wodurch die Maschine geregelt werden kann. Die Analyse trägt also dazu bei, das Verhalten oder die Ansteuerung einer der Maschinen zu verändern. Insbesondere kann eine vollautomatische Einstellung, z.B. von Parametern, erfolgen. Hierdurch kann eine automatische Verbesserung der Produktion erzielt werden.

Die Rückkopplung an die Maschine kann z.B. mittels HTTP, MQTT, per serieller Schnittstelle und/oder mittels Websockets erfolgen.

Bevorzugt wird die Analyse verwendet, um eine, insbesondere automatische, Optimierung des Betriebs zumindest einer der Maschinen zu erreichen. Wie oben bereits beispielhaft ausgeführt, können durch die Analyse von Fehlern in einem Produktionsprozess Probleme einzelner Maschinen erkannt werden. Hierdurch kann der Betrieb der als Fehlerquelle erkannten Maschine dann verändert werden, um den Betrieb dieser Maschine zu verbessern bzw. zu optimieren. Hierzu kann aus dem Datenbestand an Abstraktionsdaten eine optimale oder optimierte Betriebseinstellung abgeleitet werden. Bevorzugt können aus den Abstraktionsdaten Einstellungen ermittelt werden, die beispielsweise andere Maschinen desselben Typs verwenden, die fehlerfrei arbeiten. Bevorzugt kann die Optimierung auch im Kontext der anderen Maschinen erfolgen, d.h. die Einstellung einer Maschine kann in Abhängigkeit von vorhergehenden oder nachfolgenden Maschinen erfolgen, um bei der Einstellung synergistische Effekte auszunutzen. Die Ausnutzung der synergistischen Effekte ist durch die Abstraktionsdaten besonders einfach, da die Abstraktionsdaten aufgrund ihres Datenformats von beliebigen Prozessen gelesen werden können. Des Weiteren können sich neue Maschinen, Prozesse und/oder Sensoren vom gleichen Typ nahtlos in die Systemumgebung einfügen, zum Beispiel bei dem Aufbau einer weiteren Produktionslinie. Der Integrationsaufwand kann also stark reduziert werden.

Gemäß einer weiteren vorteilhaften Ausführungsform sind die Maschinen an einem gemeinsamen Produktionsprozess beteiligt. Dies bedeutet, dass beispielsweise eine erste Maschine einen ersten Produktionsschritt ausführt, eine zweite Maschine einen zweiten Produktionsschritt ausführt und eine dritte Maschine einen dritten Produktionsschritt ausführt. Alternativ können die Maschinen auch gemeinsam Produktionsschritte ausführen, d.h. es können zwei oder mehr Maschinen an einem einzigen Produktionsschritt beteiligt sein.

Gemäß einer weiteren vorteilhaften Ausführungsform ist das erste Datenformat ein von dem jeweiligen Sensor nativ verwendetes Datenformat. Dies bedeutet, dass das erste Datenformat von dem jeweiligen Sensor standardmäßig verwendet bzw. ausgegeben wird und beispielsweise von dem jeweiligen Hersteller des Sensors vorgegeben ist.

Um das jeweilige erste Datenformat eines Sensors in die Abstraktionsdaten umzuwandeln, ist das jeweilige Abstraktionsmodul bevorzugt ausgebildet, das erste Datenformat in die Abstraktionsdaten zu wandeln. Das Abstraktionsmodul kann hierzu Informationen über die Struktur des ersten Datenformats umfassen. Insbesondere kann jeweils ein separates Abstraktionsmodul für jedes erste Datenformat vorgesehen sein.

Das zweite Datenformat kann beispielsweise aus dem ersten Datenformat erzeugt werden, indem Ergänzungen und/oder Hinzufügungen zu den Betriebsdaten (in dem ersten Datenformat) vorgenommen werden. Die Ergänzungen können in der Form der später erläuterten Semantik erfolgen.

Das Abstraktionsmodul kann in einem (Software-)Container integriert sein. Beispielsweise kann jedes Abstraktionsmodul eine eigene Anwendung sein, welche mittels einer Betriebssystemvirtualisierung in einem Container isoliert ist. Für eine solche Betriebssystemvirtualisierung kann z.B. die Open-Source-Software "Docker" verwendet werden.

Durch die Integration des Abstraktionsmoduls in einen Container kann das Abstraktionsmodul plattformübergreifend genutzt werden und unabhängig von einem Betriebssystem die Abstraktionsdaten für ein jeweiliges erstes Datenformat zur Verfügung stellen.

Gemäß einer anderen Ausführungsform ist das erste Datenformat für zumindest einen Teil der Sensoren jeweils unterschiedlich. Durch unterschiedliche Sensoren können also unterschiedliche erste Datenformate bereitgestellt werden.

Bevorzugt umfasst das zweite Datenformat eine Semantik, welche die Abstraktionsdaten mit Bedeutungen versieht und zumindest einer Kategorie zuordnet. Die Semantik erlaubt das Zuordnen von Bedeutungen und/oder Kategorien zu den Abstraktionsdaten, d.h. den umgewandelten Betriebsdaten. Die Verwendung einer Semantik erlaubt eine Vereinfachung einer maschinenübergreifenden Verwendung der Abstraktionsdaten. Zudem wird es ermöglicht, eine Vielzahl verschiedener Maschinen und damit von verschiedenen Daten in den Abstraktionsdaten zu speichern, da durch die Zuordnung der Bedeutung und/oder der Kategorie erkenntlich ist, was die Daten aussagen. Beispielsweise können als Kategorien ein Druck, eine Temperatur, eine Drehzahl und der gleichen vorgesehen sein. Um die Semantik zu verwirklichen können die Abstraktionsdaten in einer Datenbank und/oder in einer Auszeichnungssprache, wie z.B. XML (Extensible Markup Language), gespeichert sein.

Bevorzugt werden die Abstraktionsdaten in Kategorien für verschiedene Datenklassen und/oder verschiedene einzelne oder verkettete Prozessschritte eingeteilt. Auch können die Abstraktionsdaten für verschiedene Produktionslinien in verschiedene Kategorien eingeteilt werden. Beispielsweise können als Kategorien für die Datenklassen Umgebungsdaten, Auftragsdaten, Qualitätsdaten, Prüfdaten, Prozessdaten, Maschinendaten und/oder Produktdaten vorgesehen sein. Die Kategorien können sich zumindest zum Teil mit anderen Kategorien schneiden oder überdecken. Auch können Daten mehreren Kategorien gleichzeitig zugeordnet sein. Dies bedeutet, dass z.B. Maschinendaten für jeden Prozessschritt und/oder jede Produktionslinie vorhanden sein können.

Durch die Semantik können auch z.B. Kategorien für bestimmte Messwerte (z.B. Fehler oder Toleranzwerte) vergeben werden. Hierdurch ist es möglich, dass unabhängig vom verwendeten Sensor oder von der verwendeten Maschine bzw. dem verwendeten Rechner die Abstraktionsdaten immer gleich gestaltet sind und durch die Semantik verstanden werden können, unabhängig davon, welcher Prozess die Analyse durchführt. Die Analyse kann zentral, d.h. auf dem genannten Server durchgeführt werden. Der Server kann die zentrale Speichereinrichtung umfassen, wobei der Server beispielsweise als "Cloud-Server" ausgebildet ist. Alternativ kann die Analyse auch lokal von der jeweiligen Maschine (oder dem jeweiligen Sensor) oder einem der jeweiligen Maschine zugeordneten Prozess einer Datenverarbeitungsanlage ausgeführt werden.

Gemäß einer weiteren vorteilhaften Ausführungsform versieht das Abstraktionsmodul die Betriebsdaten automatisch mit der Semantik, d.h. das Abstraktionsmodul nimmt eine automatische Annotation der Betriebsdaten vor. Hierdurch wird es ermöglicht, dass auch neue, d.h. bisher unbekannte Sensoren bzw. unbekannte erste Datenformate automatisch, d.h. ohne manuelle Anpassung des Abstraktionsmoduls, von dem Abstraktionsmodul verarbeitet werden können. Die automatisierte Annotation kann mittels maschinellen Lernens gelöst werden. Mit immer mehr Daten lernt das Annotationssystem (d.h. das Abstraktionsmodul) dazu und wird sukzessive präziser.

Hierzu kann das Abstraktionsmodul beispielsweise anhand bekannter Wertebereiche, die sich für einen von dem Sensor gemessenen Parameter aus den Abstraktionsdaten ergeben, anhand der Daten des zunächst unbekannten Sensors auf die Struktur des ersten Datenformats dieses Sensors rückschließen. Vorteilhafterweise können dann neue und unbekannte Sensoren nahtlos in den Produktionsprozess integriert werden und sofort zur Bereitstellung von Abstraktionsdaten verwendet werden. Je mehr Daten dem Abstraktionsmodul über die (Produktions)-Umgebung und Infrastruktur bekannt sind, desto schneller und besser kann eine automatische Zuweisung erfolgen.

Beispielsweise kann bei einem Temperatursensor, welcher einen Lötprozess überwacht, gezielt nach Werten im Bereich von 200 bis 350°C in dem ersten Datenformat dieses Sensors gesucht werden. Können solche Werte an einer bestimmten Stelle des ersten Datenformats von dem Abstraktionsmodul erkannt werden, so kann das Abstraktionsmodul diese Werte mit der entsprechenden Semantik versehen und in den Abstraktionsdaten speichern bzw. in die Abstraktionsdaten überführen. Um komplexere Lernprozesse durchführen zu können, kann das Abstraktionsmodul eine künstliche Intelligenz oder eine Fuzzy-Logic umfassen. Alternativ oder zusätzlich kann die Semantik auch zumindest zum Teil manuell hinzugefügt werden.

Besonders bevorzugt umfasst das zweite Datenformat Beziehungen zwischen den Kategorien der Abstraktionsdaten. Das zweite Datenformat bzw. die Abstraktionsdaten können somit eine relationale Datenbank darstellen und/oder ein sogenanntes Entity-Relationship-Model verwirklichen. Beispielsweise kann in den Abstraktionsdaten eine Beziehung zwischen einem Material eines Bauteils und einer hierfür benötigten Drehzahl beim Bohren durch das Bauteil angegeben sein.

Bevorzugt können die Beziehungen zwischen den Kategorien der Abstraktionsdaten eingelernt werden, so dass die Abstraktionsdaten z.B. auch zusätzlich angeben können, dass das Steigen eines Werts in einer Kategorie üblicherweise eine bestimmte Wirkung nach sich zieht. Beispielsweise kann ein erhöhter Stromverbrauch in einem Bohrprozess darauf hindeuten, dass ein vorgelagerter Fräsprozess ungenau gearbeitet hat und der Bohrer nun an einer stehengebliebenen Kante ansteht.

Gemäß einer weiteren vorteilhaften Ausführungsform wird die Analyse auf einem vorzugsweise tragbaren Anzeigegerät ausgegeben, welches eine Position der die Analyse betreffenden Maschine anzeigt. Durch die Anzeige der Position der entsprechenden Maschine kann ein Arbeiter, beispielsweise in großen und unübersichtlichen Produktionshallen, auf einfache Weise direkt zu der entsprechenden Maschine geführt werden. Bevorzugt wird die Information intelligent gefiltert und kontextbasiert nur dem zuständigen und/oder entsprechend befähigten Werker bzw. Arbeiter angezeigt. Ist der Werker bzw. Arbeiter bei der Maschine angelangt, kann die Maschine eingestellt oder genauer überwacht werden. Bei dem tragbaren Anzeigegerät kann es sich insbesondere um ein Mobiltelefon oder um einen Tablet-Computer handeln. Das tragbare Anzeigegerät kann beispielsweise mittels einer Funkverbindung (z.B. WLAN) mit der zentralen Speichereinrichtung verbunden sein. Vor Ort kann dann ein Sensor ergänzende, präzisere Daten über sein Display anzeigen.

Bevorzugt enthält die Analyse ein Kennzeichenfeld der betreffenden Maschine. Das Kennzeichenfeld kann beispielsweise Messwerte, d.h. Betriebsdaten, der letzten Stunden oder Tage umfassen, so dass aus dem Kennzeichenfeld ersichtlich ist, ob bei der betreffenden Maschine Fehler auftreten oder nicht. Anhand des Kennzeichenfelds kann somit eine veränderte Einstellung der Maschine vorgenommen werden. Insbesondere umfasst das Kennzeichenfeld Diagramme mit einem Boxplot, so dass eine Streuung von Messwerten gekennzeichnet wird. Insbesondere kann das Kennzeichenfeld auch einen Vergleich mit identischen oder ähnlichen Maschinen enthalten. Das Kennzeichenfeld kann auf dem tragbaren Anzeigegerät ausgegeben werden, so dass das Kennzeichenfeld "vor Ort" zur Verfügung steht und die Einstellung einer Maschine vereinfachen kann.

Bevorzugt kann die ausgegebene Analyse auch einen Ampel-Code enthalten. Dies bedeutet, dass der Betriebszustand der jeweiligen Maschine z.B. durch die Farben Grün (ordnungsgemäßer Betrieb), Gelb (Warnung bzw. geringe Fehler) und/oder Rot (Ausfall, massiver Fehler) angezeigt wird. Durch den Ampelcode kann ein Bediener schnell und zuverlässig auf den Betriebszustand einer Maschine hingewiesen werden.

Weiter bevorzugt kann die Analyse ein Histogramm enthalten. Das Histogramm kann z.B. eine Fehlerhäufigkeit einer der Maschinen in verschiedenen Zeiträumen angeben.

Weiter bevorzugt kann die Analyse weitere Diagrammarten darstellen wie z.B. Balkendiagramme und/oder zeitliche Messverläufe inklusive Toleranzbänder etc.

Gemäß einer weiteren vorteilhaften Ausführungsform ist zumindest eines der Abstraktionsmodule in dem jeweiligen Sensor integriert. Dies bedeutet, dass der Sensor direkt Abstraktionsdaten ausgeben und/oder annehmen kann. Grundsätzlich können die Abstraktionsmodule auch zentral, beispielsweise in dem Server, angeordnet sein bzw. von dem Server ausgeführt werden.

Die Abstraktionsmodule können untereinander kommunizieren und können so auch von einem jeweiligen spezialisierten Abstraktionsmodul lernen, um z.B. neue Komponenten schneller zu integrieren.

Die Verwendung von Sensoren mit integriertem Abstraktionsmodul kann die Einbindung neuer Sensoren in einen bestehenden Produktionsprozess stark vereinfachen, da keine Veränderung von Abstraktionsmodulen notwendig ist. Stattdessen kann der jeweilige Hersteller des Sensors das entsprechende Abstraktionsmodul bereitstellen.

Gemäß einer weiteren Ausführungsform wird die Analyse an ein Produktionsleitsystem und/oder an ein Betriebsleitsystem ausgegeben. Die Analyse kann also z.B. an ein Enterprise-Resource-Planing-System (ERP) oder z.B. an ein Manufacturing Execution System (MES) ausgegeben werden. Aufgrund der Analyse kann eine Ressourcenplanung und/oder Ablaufplanung vorgenommen werden. Beispielsweise kann eine Ressourcenplanung dahingehend verändert werden, dass weniger Bauteile gefertigt werden, wenn erkannt wird, dass sich der Ausschuss eines Produktionsprozesses verringert.

Gemäß einer weiteren vorteilhaften Ausführungsform wird die Analyse einem Anweisungsmodul zugeführt, wobei das Anweisungsmodul den Betrieb einer der Maschinen verändert. Das Anweisungsmodul kann aus den Abstraktionsdaten und/oder aus der Analyse konkrete Anweisungen für den Betrieb der jeweiligen Maschine erzeugen. Hierzu kann das Anweisungsmodul in der jeweiligen Maschine oder auch zentral in dem genannten Server angeordnet sein. Das Anweisungsmodul kann aus der Analyse beispielsweise ableiten, dass ein Versatz für ein Bohrloch besteht, so dass das nächste Bohrloch um den Versatz korrigiert wird.

Besonders bevorzugt enthält die Analyse eine Vorhersage über einen zukünftigen Betriebszustand einer der Maschinen. Beispielsweise kann die Vorhersage auf Abstraktionsdaten ähnlicher oder identischer anderer Maschinen beruhen, wobei z.B. festgestellt wird, dass ein Ausfall der Maschine nach jeweils einer bestimmten Anzahl von Betriebsstunden erfolgt ist. Hierdurch kann dann vorhergesagt werden, dass auch eine weitere solche Maschine mit hoher Wahrscheinlichkeit nach einer bestimmten Anzahl Betriebsstunden ausfallen wird. Die Vorhersage profitiert stark von den Abstraktionsdaten und wird z.B. von einer künstlichen Intelligenz bzw. einer Fuzzy-Logic erzeugt. Bevorzugt beruht die Vorhersage auf den Abstraktionsdaten.

Gemäß einer weiteren vorteilhaften Ausführungsform werden gemäß dem Verfahren Betriebsdaten von einem Pastendrucker, welcher Lötpaste aufträgt, und einer Lötanlage mittels optischer Sensoren erfasst. Gemäß dieser Ausführungsform umfasst die Analyse die Qualität eines Pastendrucks und die Qualität eines Lötprozesses. Bevorzugt wird aufgrund der Qualität des Pastendrucks eine Veränderung des Betriebs der Lötanlage und/oder aufgrund der Qualität des Lötprozesses eine Veränderung des Betriebs des Pastendruckers vorgenommen.

Beispielsweise werden also Daten über den Pastendrucker und die Lötanlage von zwei separaten Abstraktionsmodulen in Abstraktionsdaten überführt. Die Abstraktionsdaten können anschließend analysiert werden.

Wird bei der Analyse beispielsweise festgestellt, dass beim Auftragen von Lötpaste beim Pastendruck ein Versatz entsteht, so kann davon ausgegangen werden, dass bei dem Lötprozess ein erhöhter Ausschuss produziert wird. Hierbei kann dann eine Veränderung des Betriebs der Lötanlage derart vorgenommen werden, dass die gelöteten Teile mit einer höheren Stichprobenanzahl kontrolliert werden. Umgekehrt kann beim Feststellen von Problemen in dem Lötprozess der Betrieb des Pastendruckers verändert werden, sodass z.B. ein Versatz des Pastendruckers kompensiert wird. Hierdurch kann dann die Qualität des Lötprozesses gesteigert werden.

Weiterer Gegenstand der Erfindung ist ein System, welches zumindest drei Maschinen, zumindest zwei Sensoren und eine Recheneinrichtung umfasst. Das erfindungsgemäße System ist ausgebildet, ein Verfahren der vorstehend erläuterten Art durchzuführen. Die Recheneinrichtung kann durch einen Server gebildet sein, welcher auch die zentrale Speichereinrichtung umfassen kann. Die Sensoren und die Maschinen sind bevorzugt mit der Recheneinrichtung mittels Datenverbindungen gekoppelt.

Gemäß einer bevorzugten Ausführungsform des Systems ist zumindest einer der Sensoren in eine der Maschinen integriert ist und/oder ist Bestandteil der jeweiligen Maschine. Die Betriebsdaten können also von der jeweiligen Maschine selbst stammen und beispielsweise eine Innentemperatur, eine Drehzahl und dergleichen angeben. Die Betriebsdaten können von einem Steuerrechner der jeweiligen Maschine, z.B. digital, bereitgestellt werden. Alternativ kann der jeweilige Sensor auch, wie bereits erwähnt, separat sein.

Zu dem erfindungsgemäßen System gelten die zu dem erfindungsgemäßen Verfahren getroffenen Aussagen entsprechend, insbesondere hinsichtlich Vorteilen und bevorzugten Ausführungsformen.

Nachfolgend wird ein Produktionsprozess rein beispielhaften unter Bezugnahme auf die Zeichnung beschrieben. Es zeigt:

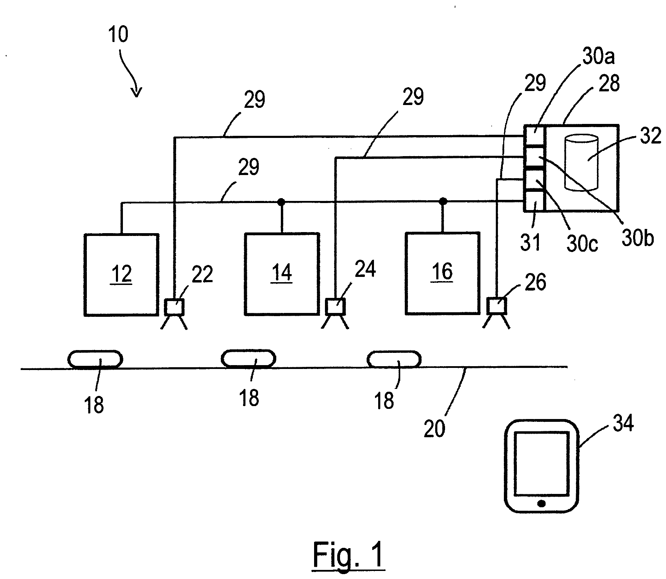

- Fig. 1: einen Produktionsprozess in schematischer Ansicht, bei welchem ein Verfahren zur maschinenübergreifenden Nutzung von Daten eingesetzt wird.

Fig. 1 zeigt eine Produktionsstraße 10, in welcher ein Pastendrucker 12 als erste Maschine, ein Bestücker 14 als zweite Maschine und eine Lötanlage 16 als dritte Maschine angeordnet sind.

Zu bearbeitende Bauteile 18, welche z.B. Platinen umfassen, werden zuerst von dem Pastendrucker 12 mit Lötpaste bedruckt. Die Bauteile 18 werden anschließend von einem Förderband 20 dem Bestücker 14 zugeführt, der elektrische und elektronische Bauteile auf den Bauteilen 18 platziert. Schließlich werden die Bauteile 18 von dem Förderband 20 zu der Lötanlage 16 transportiert, die unter Hitzeeinwirkung die Lötpaste schmilzt, wobei beim nachfolgenden Erstarren der Lötpaste feste elektrisch leitende Verbindungen mit den elektronischen Bauteilen entstehen.

Die Funktion des Pastendruckers wird durch einen ersten optischen Sensor 22 überwacht, welcher beispielsweise einen Versatz der Lötpaste ermittelt.

Die Bestückung durch den Bestücker 14 wird von einem zweiten optischen Sensor 24 kontrolliert und schließlich wird das Lötergebnis der Lötanlage 16 durch einen dritten optischen Sensor 26 überwacht.

Die optischen Sensoren 22, 24, 26 sind mit einem Server 28 mittels Datenleitungen 29 gekoppelt, wobei in den Server 28 drei Abstraktionsmodule 30a, 30b, 30c integriert sind, die von dem Server 28 ausgeführt werden.

Von den optischen Sensoren 22, 24, 26 werden Betriebsdaten der jeweiligen Maschine 12, 14, 16 in einem jeweils unterschiedlichen ersten Datenformat mittels der Datenleitungen 29 an die Abstraktionsmodule 30a, 30b, 30c übermittelt. Die Abstraktionsmodule 30 wandeln das jeweilige erste Datenformat in Abstraktionsdaten in einem einheitlichen zweiten Datenformat um. Die Abstraktionsdaten werden in einer zentralen Speichereinrichtung 32 gespeichert.

Alternativ können die Sensoren 22, 24, 26 auch in die jeweilige Maschine 12, 14, 16 integriert sein, sodass die Maschinen 12, 14, 16 auch direkt mit dem jeweiligen Abstraktionsmodul 30a, 30b, 30c mittels Datenleitungen gekoppelt sein können (nicht gezeigt).

Aufgrund der Abstraktionsdaten in der zentralen Speichereinrichtung 32 wird von dem Server 28 eine Analyse des Produktionsprozesses und damit eine Analyse der drei Maschinen 12, 14, 16 vorgenommen. Wird beispielsweise erkannt, dass die Lötanlage 16 zu viele fehlerhafte Bauteile 18 produziert, so kann eine Einstellung des Pastendruckers 12 verändert werden, um beispielsweise mehr oder weniger Lötpaste auf die Bauteile 18 aufzutragen. Um die Einstellung des Pastendruckers 12 zu verändern, wird der Pastendrucker 12 über ein Anweisungsmodul 31 und eine weitere Datenleitung 29 von dem Server 28 angesteuert. Das Anweisungsmodul ist mit allen Maschinen 12, 14, 16 gekoppelt.

Anders ausgedrückt erstellt der Server 28 eine Analyse, in die gemäß einer nichterfindungsgemäßen Ausführungsform Betriebsdaten aller Maschinen 12, 14, 16 eingehen und aufgrund derer der Betriebszustand des Pastendruckers 12 beurteilt und verändert wird. Zusätzlich kann die Analyse auf einem mobilen Anzeigegerät 34, z.B. einem Tablet-Computer, ausgegeben werden. Das Anzeigegerät 34 ist mittels einer Funkverbindung mit dem Server 28 verbunden, wobei auf dem Anzeigegerät 34 auch der Standort des Pastendruckers 12 angezeigt wird. Ein Mitarbeiter weiß aufgrund des angezeigten Standorts, wo sich der betroffene Pastendrucker 12 befindet, und kann - nachdem er bei dem Pastendrucker 12 angelangt ist - aufgrund der Anzeige der Analyse auf dem mobilen Anzeigegerät 34 zusätzlich die Veränderung des Pastenauftrags durch den Pastendrucker 12 überwachen.

Vorteilhafterweise kann somit durch die Überwachung mehrerer Maschinen 12, 14, 16 und die Verknüpfung der so erzeugten Abstraktionsdaten das Produktionsergebnis der Produktionsstraße 10 verbessert werden. Bevorzugt können auch die Daten mehrerer paralleler Produktionsstraßen (nicht gezeigt) ausgewertet werden, um das jeweilige Produktionsergebnis zu verbessern. Der manuelle Aufwand für Qualitätsauswertungen, Fehlersuche, Maschinenwartungen reduziert sich. Kosten wie z.B. für die Integration neuer Anlagen sinken und Stillstandszeiten werden minimiert.

### Bezuqszeichenliste

- 10: Produktionsstraße
- 12: Pastendrucker
- 14: Bestücker
- 16: Lötanlage
- 18: Bauteile
- 20: Förderband
- 22: erster optischer Sensor
- 24: zweiter optischer Sensor
- 26: dritter optischer Sensor
- 28: Server
- 29: Datenleitung
- 30a, 30b, 30c: Abstraktionsmodul
- 31: Anweisungsmodul
- 32: zentrale Speichereinrichtung
- 34: mobiles Anzeigegerät

## Patentansprüche

1. Verfahren zur maschinenübergreifenden Nutzung von Daten, bei welchem
- Betriebsdaten von mehreren Maschinen (12, 14, 16) von mehreren Sensoren (22, 24, 26) erfasst werden, wobei die Betriebsdaten verschiedene erste Datenformate aufweisen, wobei das jeweilige erste Datenformat von dem jeweiligen Sensor (22, 24, 26) abhängt,
- die Betriebsdaten von zumindest einem Abstraktionsmodul (30a, 30b, 30c) in Abstraktionsdaten umgewandelt werden, wobei die Abstraktionsdaten ein einheitliches zweites Datenformat aufweisen und in einer zentralen Speichereinrichtung (32) gespeichert werden,
- eine Analyse der Abstraktionsdaten vorgenommen wird, wobei die Analyse auf Betriebsdaten zumindest zweier Maschinen (12, 14, 16) beruht,
**dadurch gekennzeichnet, dass**
- anhand der Analyse ein Betriebszustand einer weiteren Maschine (12, 14, 16), die mit den zumindest zwei Maschinen (12, 14, 16) in einer Produktionsstraße aufeinanderfolgende Fertigungsprozesse durchführt, beurteilt wird, und
- die Analyse der Abstraktionsdaten ausgegeben wird.

2. Verfahren nach Anspruch 1,
**dadurch gekennzeichnet, dass**
die Analyse verwendet wird, um zumindest eine der Maschinen (12, 14, 16) zu steuern.

3. Verfahren nach Anspruch 1 oder 2,
**dadurch gekennzeichnet, dass**
die Analyse verwendet wird, um eine Optimierung des Betriebs zumindest einer der Maschinen (12, 14, 16) zu erreichen.

4. Verfahren nach einem der vorstehenden Ansprüche,
**dadurch gekennzeichnet, dass**
die Maschinen (12, 14, 16) an einem gemeinsamen Produktionsprozess (10) beteiligt sind.

5. Verfahren nach einem der vorstehenden Ansprüche,
**dadurch gekennzeichnet, dass**
das erste Datenformat ein von dem jeweiligen Sensor (22, 24, 26) nativ verwendetes Datenformat ist.

6. Verfahren nach einem der vorstehenden Ansprüche,
**dadurch gekennzeichnet, dass**
das zweite Datenformat eine Semantik umfasst, welche die Abstraktionsdaten mit Bedeutungen versieht und zumindest einer Kategorie zuordnet.

7. Verfahren nach einem Anspruch 6,
**dadurch gekennzeichnet, dass**
das Abstraktionsmodul (30a, 30b, 30c) die Betriebsdaten automatisch mit der Semantik versieht.

8. Verfahren nach einem der Ansprüche 6 oder 7,
**dadurch gekennzeichnet, dass**
das zweite Datenformat Beziehungen zwischen den Kategorien der Abstraktionsdaten umfasst.

9. Verfahren nach einem der vorstehenden Ansprüche,
**dadurch gekennzeichnet, dass**
die Analyse auf einem tragbaren Anzeigegerät (34) ausgegeben wird, welches eine Position der die Analyse betreffenden Maschine (12, 14, 16) anzeigt.

10. Verfahren nach einem der vorstehenden Ansprüche,
**dadurch gekennzeichnet, dass**
zumindest eines der Abstraktionsmodule (30a, 30b, 30c) in dem jeweiligen Sensor (22, 24, 26) integriert ist.

11. Verfahren nach einem der vorstehenden Ansprüche,
**dadurch gekennzeichnet, dass**
die Analyse an ein Produktionsleitsystem und/oder an ein Betriebsleitsystem ausgegeben wird.

12. Verfahren nach einem der vorstehenden Ansprüche,
**dadurch gekennzeichnet, dass**
die Analyse eine Vorhersage über einen zukünftigen Betriebszustand einer der Maschinen (12, 14, 16) umfasst.

13. Verfahren nach einem der vorstehenden Ansprüche,
**dadurch gekennzeichnet, dass**
- Betriebsdaten von einem Pastendrucker (12) und einer Lötanlage (16) mit optischen Sensoren (22, 26) erfasst werden,
- die Analyse die Qualität eines Pastendrucks und die Qualität eines Lötprozesses umfasst, und
- aufgrund der Qualität des Pastendrucks eine Veränderung des Betriebs der Lötanlage (16) und/oder aufgrund der Qualität des Lötprozesses eine Veränderung des Betriebs des Pastendruckers (12) vorgenommen wird.

14. System (10), umfassend zumindest drei Maschinen (12, 14, 16), zumindest zwei Sensoren (22, 24, 26) und eine Recheneinrichtung (28),
**dadurch gekennzeichnet, dass**
das System (10) ausgebildet ist, ein Verfahren gemäß einem der Ansprüche 1 bis 13 durchzuführen.

15. System (10) nach Anspruch 14,
**dadurch gekennzeichnet, dass**
zumindest einer der Sensoren (22, 24, 26) in eine der Maschinen (12, 14, 16) integriert ist und/oder Bestandteil einer der Maschinen (12, 14, 16) ist.

## Claims

1. A method for the utilization of data from a plurality of machines, in which
- operating data from a plurality of machines (12, 14, 16) are detected by a plurality of sensors (22, 24, 26), wherein the operating data have different first data formats, with the respective first data format depending on the respective sensor (22, 24, 26);
- the operating data are converted by at least one abstraction module (30a, 30b, 30c) into abstraction data, wherein the abstraction data have a uniform second data format and are stored in a central memory device (32);
- an analysis of the abstraction data is carried out, wherein the analysis is based on operating data from at least two machines (12, 14, 16), **characterized in that**
- an operating state of a further machine (12, 14, 16), which carries out production processes following one another in a production line with the at least two machines (12, 14, 16), is assessed based on the analysis; and
- **in that** the analysis of the abstraction data is output.

2. A method in accordance with claim 1,
**characterized in that**
the analysis is used to control at least one of the machines (12, 14, 16).

3. A method in accordance with claim 1 or claim 2,
**characterized in that**
the analysis is used to achieve an optimization of the operation of at least one of the machines (12, 14, 16).

4. A method in accordance with any one of the preceding claims,
**characterized in that**
the machines (12, 14, 16) are involved in a common production process (10).

5. A method in accordance with any one of the preceding claims,
**characterized in that**
the first data format is a data format which is used natively by the respective sensor (22, 24, 26).

6. A method in accordance with any one of the preceding claims,
**characterized in that**
the second data format comprises semantics which provides the abstraction data with meanings and associates said abstraction data with at least one category.

7. A method in accordance with claim 6,
**characterized in that**
the abstraction module (30a, 30b, 30c) automatically provides the operating data with the semantics.

8. A method in accordance with one of the claims 6 or 7,
**characterized in that**
the second data format comprises relationships between the categories of the abstraction data.

9. A method in accordance with any one of the preceding claims,
**characterized in that**
the analysis is output on a portable display device (34) which displays a position of the machine (12, 14, 16) relating to the analysis.

10. A method in accordance with any one of the preceding claims,
**characterized in that**
at least one of the abstraction modules (30a, 30b, 30c) is integrated in the respective sensor (22, 24, 26).

11. A method in accordance with any one of the preceding claims,
**characterized in that**
the analysis is output to a production control system and/or to an operation control system.

12. A method in accordance with any one of the preceding claims,
**characterized in that**
the analysis comprises a prediction about a future operating state of one of the machines (12, 14, 16).

13. A method in accordance with any one of the preceding claims,
**characterized in that**
- operating data from a paste printer (12) and from a soldering system (16) are detected by optical sensors (22, 26);
- **in that** the analysis comprises the quality of a paste print and the quality of a soldering process; and
- **in that** a change in the operation of the soldering system (16) is carried out on the basis of the quality of the paste print and/or a change in the operation of the paste printer (12) is carried out on the basis of the quality of the soldering process.

14. A system (10) comprising at least three machines (12, 14, 16); at least two sensors (22, 24, 26); and a processing device (28),
**characterized in that**
the system (10) is configured to carry out a method in accordance with any one of the claims 1 to 13.

15. A system (10) in accordance with claim 14,
**characterized in that**
at least one of the sensors (22, 24, 26) is integrated into one of the machines (12, 14, 16) and/or is a component of one of the machines (12, 14, 16).

## Revendications

1. Procédé pour l'utilisation inter-machines de données, dans lequel
- des données de fonctionnement de plusieurs machines (12, 14, 16) sont saisies par plusieurs capteurs (22, 24, 26), les données de fonctionnement ayant différents premiers formats de données, le premier format de données respectif dépendant du capteur respectif (22, 24, 26),
- les données de fonctionnement d'au moins un module d'abstraction (30a, 30b, 30c) sont converties en données d'abstraction, les données d'abstraction ayant un second format de données uniforme et étant stockées dans un moyen de stockage central (32),
- une analyse des données d'abstraction est effectuée, l'analyse étant basée sur des données de fonctionnement d'au moins deux machines (12, 14, 16),
**caractérisé en ce que**
- l'analyse est utilisée pour évaluer l'état de fonctionnement d'une autre machine (12, 14, 16) qui effectue des processus de fabrication successifs avec lesdites au moins deux machines (12, 14, 16) dans une ligne de production, et
- l'analyse des données d'abstraction est émise.

2. Procédé selon la revendication 1,
**caractérisé en ce que**
l'analyse est utilisée pour contrôler l'une au moins des machines (12, 14, 16).

3. Procédé selon la revendication 1 ou 2,
**caractérisé en ce que**
l'analyse est utilisée pour obtenir une optimisation du fonctionnement de l'une au moins des machines (12, 14, 16).

4. Procédé selon l'une des revendications précédentes,
**caractérisé en ce que**
les machines (12, 14, 16) sont impliquées dans un processus de production en commun.

5. Procédé selon l'une des revendications précédentes,
**caractérisé en ce que**
le premier format de données est un format de données utilisé nativement par le capteur respectif (22, 24, 26).

6. Procédé selon l'une des revendications précédentes,
**caractérisé en ce que**
le second format de données inclut une sémantique qui attribue des significations aux données d'abstraction et qui les associe à au moins une catégorie.

7. Procédé selon la revendication 6,
**caractérisé en ce que**
le module d'abstraction (30a, 30b, 30c) attribue la sémantique automatiquement aux données de fonctionnement.

8. Procédé selon l'une des revendications 6 ou 7,
**caractérisé en ce que**
le second format de données inclut des relations entre les catégories des données d'abstraction.

9. Procédé selon l'une des revendications précédentes,
**caractérisé en ce que**
l'analyse est émise sur un afficheur portable (34) qui affiche la position de la machine (12, 14, 16) concernant l'analyse.

10. Procédé selon l'une des revendications précédentes,
**caractérisé en ce que**
l'un au moins des modules d'abstraction (30a, 30b, 30c) est intégré dans le capteur respectif (22, 24, 26).

11. Procédé selon l'une des revendications précédentes,
**caractérisé en ce que**
l'analyse est émise à un système de gestion de production et/ou à un système de gestion de fonctionnement.

12. Procédé selon l'une des revendications précédentes,
**caractérisé en ce que**
l'analyse inclut une prédiction relative à un état de fonctionnement futur de l'une des machines (12, 14, 16).

13. Procédé selon l'une des revendications précédentes,
**caractérisé en ce que**
- des données de fonctionnement d'une imprimante à pâte (12) et d'une installation de brasage (16) sont saisies par des capteurs optiques (22, 26),
- l'analyse inclut la qualité d'une impression de pâte et la qualité d'un processus de brasage, et
- en fonction de la qualité de l'impression de pâte, un changement dans le fonctionnement de l'installation de brasage (16) est effectué, et/ou en fonction de la qualité du processus de brasage, un changement dans le fonctionnement de l'imprimante à pâte (12) est effectué.

14. Système (10), comprenant au moins trois machines (12, 14, 16), au moins deux capteurs (22, 24, 26) et un moyen de calcul (28),
**caractérisé en ce que**
le système (10) est réalisé pour mettre en oeuvre un procédé selon l'une des revendications 1 à 13.

15. Système (10) selon la revendication 14,
**caractérisé en ce que**
l'un au moins des capteurs (22, 24, 26) est intégré dans l'une des machines (12, 14, 16) et/ou fait partie de l'une des machines (12, 14, 16).
